# EUROPEAN PATENT APPLICATION

(11) **EP 2 711 154 A1**
(43) Date of publication of application: **26.03.2014**
(21) Application number: 12785535.1
(22) Date of filing: 15.03.2012
(51) Int. Cl.: B29C 39/38, B29C 39/10, B29C 70/06, B29K 101/10, B29K 105/08

(54) **RESIN TRANSFER MOLDING METHOD AND RESIN TRANSFER MOLDING DEVICE**

(30) Priority: 16.05.2011 JP 2011109670
(71) Applicant: Mitsubishi Heavy Industries, Ltd., Tokyo 108-8215 (JP)
(72) Inventor: AKIYAMA, Hiromichi, Tokyo 108-8215 (JP); KANEMASU, Masayuki, Tokyo 108-8215 (JP)
(74) Representative: Henkel, Breuer & Partner
(86) International application number: PCT/JP2012/056696
(87) International publication number: WO 2012/157327

(57) **Abstract**

Provided is a method for molding a molded article without voids, porosity, and resin sinks on the surface or inside while maintaining a plate thickness accuracy even for a thick plate member having a plate thickness of 10 mm or more. A RTM method comprising a first temperature raising step comprising impregnating a thermosetting resin in a dry fiber preform disposed in a molding die comprising two or more separate die members, and thereafter raising temperature of any of the die members constituting the molding die to form a temperature gradient having a temperature difference of a predetermined value or more from one side of the dry fiber preform toward the other side; and a second temperature raising step of raising temperature of a die member different from the die member whose temperature is raised in the first temperature raising step.

## Description

### {Technical Field}

The present invention relates to an RTM (Resin Transfer Molding) method and an RTM apparatus for RTM molding by impregnating a thermosetting resin in a dry fiber preform.

### {Background Art}

RTM is a molding method in which a thermosetting resin is injected in a dry fiber preform disposed in a cavity formed inside a pair of molding dies, and the thermosetting resin is cured by heating. A very high form accuracy may be expected in the RTM because the RTM is a closed molding method.

In Patent Literature 1, an RTM apparatus is described in which a reinforcing fiber fabric is disposed in a molding die comprising an upper die and a lower die, and molding is carried out by injecting a thermosetting resin from one end side in the molding die, impregnating the thermosetting resin into the reinforcing fiber fabric, and thereafter heating and curing the thermosetting resin.

### {Citation List}

### {Patent Literature}

{PTL 1} The publication of Japanese Patent No. 3421101 {Paragraph

(0008)}

### {Summary of Invention}

### {Technical Problem}

A conventional RTM method impregnates a thermosetting resin in an in-plane direction from one end side of a dry fiber preform toward the other end side. Therefore, in the case where a thick plate member is molded, a great deal of time is required in impregnating a thermosetting resin and there is a risk of generating non-impregnated.

As a method for solving the above problem, a method in which a resin is impregnated from the entire surface of a dry fiber preform toward the plate thickness direction using an intermediate medium such as a porous plate, a perforated film, or the like is proposed. Even in this method, however, when a thick plate member having a plate thickness of 10 mm or more is molded, there is a problem of generation of voids and porosity inside.

The voids and porosity may probably be generated due to bubbles contained in the thermosetting resin and gasification of volatile components contained the thermosetting resin at the time of a curing reaction. Moreover, sinks may be generated due to shrinkage on curing of the thermosetting resin.

In Patent Literature 1, proposed is a method for preventing the generation of bubbles and non-impregnated regions by providing a cooling and heat insulation mechanism in a molding die, making a temperature gradient in a surface direction of a reinforcing fiber fabric, and heating a resin sump part outside the product last, thereby keeping a state in which a thermosetting resin is always supplied. However, since this method impregnates the thermosetting resin toward the surface direction of the dry fiber preform, the impregnation may not be sufficiently carried out and there is a risk of generation of non-impregnated regions when a thick plate member having a plate thickness of 10 mm or more is used.

In Patent Literature 1, since a cooling pipe system and a plurality of heat insulating pores in the molding die are provided, there is a problem that a jig becomes complicated and the control and maintenance of the jig become difficult.

The present invention has been accomplished in consideration of these circumstances and intends to provide a method for molding a molded article without voids and porosity inside while maintaining a plate thickness accuracy even for a thick plate member having a plate thickness of 10 mm or more.

### {Solution to Problem}

In order to solve the above problem, the present invention provides an RTM method comprising: a first temperature raising step comprising impregnating a thermosetting resin into a dry fiber preform disposed in a molding die comprising two or more separate die members, and thereafter raising a temperature of any one of the die members constituting the molding die to form a temperature gradient from one side of the dry fiber preform toward the other side, the temperature gradient having a temperature difference equal to or more than a predetermined value; and a second temperature raising step of raising a temperature of a die member different from the die member whose temperature is raised in the first temperature raising step.

In the above invention, the second temperature raising step may include, after the first temperature raising step, raising the temperature of a die member different from the die member whose temperature is raised in the first temperature raising step so as not to be higher than the temperature of the die member whose temperature is raised in the first temperature raising step.

The thermosetting resin once decreases in the viscosity by heating; however, when the predetermined heating condition is achieved, a crosslinking reaction proceeds to increase the viscosity. The thermosetting resin is impregnated into the dry fiber preform in such a state that the viscosity is decreased, and after that, the thermosetting resin is cured by further heating. According to the above invention, first of all, the temperature of any one of molding dies is raised to form a temperature gradient in the dry fiber preform in which the thermosetting resin is impregnated. Thereby, while the viscosity of the thermosetting resin becomes high from the side of the molding die whose temperature is raised, the viscosity of the thermosetting resin on the side of the molding die whose temperature is not raised remains low, and the viscosity gradient is generated in the dry fiber preform. The bubbles contained in the thermosetting resin and volatile components generated during the curing reaction of the thermosetting resin move to the region of the low viscosity side, or are generated in the region of the low viscosity side. Moreover, it is also possible that the resin sinks at the time of curing are collected in the region of the low viscosity side (uncured side). Therefore, by forming a temperature gradient having a temperature difference equal to or more than a predetermined value in the dry fiber preform, it is possible to get bubbles contained in the thermosetting resin and volatile components generated during the curing reaction of the thermosetting resin together on the side of the die member whose temperature is not raised. Namely, it is possible to control the region where the voids and porosity are generated.

It is preferable in one aspect of the present invention to impregnate the thermosetting resin into the dry fiber preform after disposing an intermediate medium between the molding die and the dry fiber preform.

By disposing the intermediate medium between the molding die and the dry fiber preform, it becomes possible to diffuse the thermosetting resin in the in-plane direction of the dry fiber preform. Thereby, it becomes easy to impregnate the thermosetting resin in the plate thickness direction of the dry fiber preform, and the generation of the non-impregnated region can thus be prevented. By disposing the intermediate medium between the die member whose temperature is raised in the second temperature raising step and the dry fiber preform, and setting the intermediate medium side to the lower temperature side, it is possible to collect bubbles contained in the thermosetting resin, volatile components generated during the curing reaction of the thermosetting resin, and resin sinks in the intermediate medium. Thereby, it becomes possible to mold a molding article without voids or porosity.

The present invention provides an RTM apparatus comprising: a first heating control part for impregnating a thermosetting resin into a dry fiber preform disposed in a molding die comprising two or more separate die members, and thereafter raising a temperature of any one of die members by heating to form a temperature gradient from one side of the dry fiber preform toward the other side, the temperature gradient having a temperature difference equal to or more than a predetermined value; and a second heating control part for raising a temperature of a die member different from the die member whose temperature is raised in the first temperature raising step so as not to be higher than the temperature of the die member whose temperature is raised in the first temperature raising step.

According to the above invention, by comprising the first heating control part, the temperature of one of the molding dies is raised to form a temperature gradient in the dry fiber preform into which the thermosetting resin is impregnated. Thereby, while the viscosity of the thermosetting resin becomes high from the side of the molding die whose temperature is raised, the viscosity of the thermosetting resin on the side of the molding die whose temperature is not raised remains low, and thus the viscosity gradient is generated in the dry fiber preform. Bubbles contained in the thermosetting resin and volatile components generated during the curing reaction of the thermosetting resin move to the region of the low viscosity side, or are generated in the region of the low viscosity side. Moreover, it is also possible to collect the resin sinks at the time of curing on the side of the low viscosity (uncured side). Therefore, it is possible to control the region of the generation of the voids, porosity, and the like.

It is possible, by comprising the second heating control part, to raise the temperature of another die member after the temperature gradient is formed in the dry fiber preform, and to get bubbles contained in the thermosetting resin and volatile components generated during the curing reaction of the thermosetting resin together on the other die member side.

It is preferable in one aspect of the above invention that an intermediate medium be disposed between the molding die and the dry fiber preform.

By disposing the intermediate medium between the molding die and the dry fiber preform, it becomes possible to diffuse the thermosetting resin to the surface direction of the dry fiber preform. It becomes thereby easy to impregnate the thermosetting resin in the plate thickness direction of the dry fiber preform, and generation of a non-impregnated region can thus be prevented. Moreover, in the case where the intermediate medium is disposed between the die member whose temperature is raised by the second heating control part and the dry fiber preform, it is possible to collect bubbles contained the thermosetting resin and volatile components generated during the curing reaction of the thermosetting resin in the intermediate medium.

### {Advantageous Effects of Invention}

According to the present invention, it is possible to mold a molding article without voids and porosity inside while preventing the generation of non-impregnated resin regions and ensuring a plate thickness accuracy even for a thick plate member having a plate thickness of 10 mm or more.

### {Brief Description of Drawings}

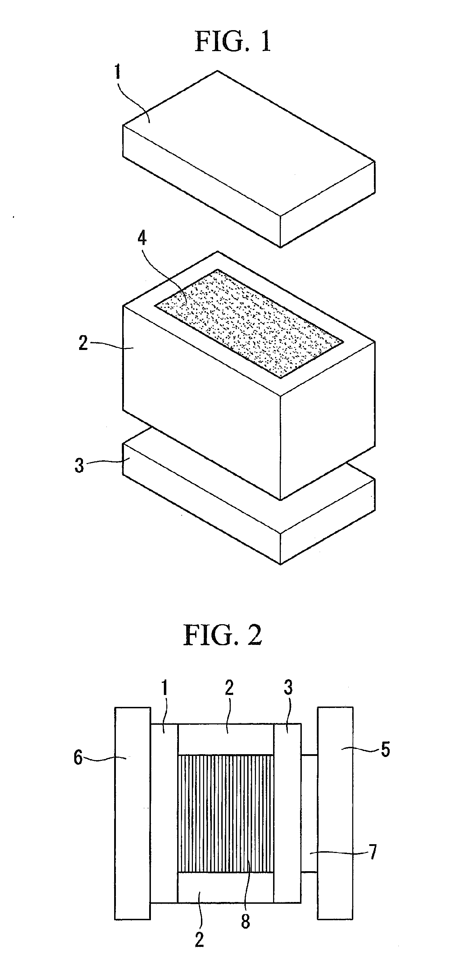

{Fig. 1}
   Fig. 1 is an exploded perspective view of a molding die according to an embodiment of the present invention.
{Fig. 2}
   Fig. 2 is a diagram illustrating an arrangement example of a heating control part according to an embodiment of the present invention.
{Fig. 3}
   Fig. 3 is a diagram illustrating an arrangement example of an intermediate medium.
{Fig. 4}
   Fig. 4 is a diagram illustrating the relationship between time and viscosity/temperature of a thermosetting resin.
{Fig. 5}
   Fig. 5 is a diagram explaining the steps of an RTM method according to an embodiment of the present invention.
{Fig. 6}
   Fig. 6 is a schematic diagram explaining a state how curing of the thermosetting resin is going on by an RTM method according to an embodiment of the present invention.
{Fig. 7}
   Fig. 7 is a diagram illustrating temperature profiles in RTM according to Example.
{Fig. 8}
   Fig. 8 is a diagram illustrating a temperature profile from T1 to T3 in RTM according to Example.
{Fig. 9}
   Fig. 9 is a schematic diagram explaining a state how curing of the thermosetting resin is going on by an RTM method according to Comparative Example.

### {Description of Embodiments}

An RTM method and an RTM apparatus according to the present invention are for molding a composite material and are applied to spars or the like of the next generation civil air craft and super high speed aircraft.

Hereinafter, one embodiment of an RTM method and an RTM apparatus according to the present invention is explained with references to Figures.

The RTM apparatus according to the present embodiment comprises a molding die and a heating control part for raising the temperature of the molding die.

The molding die comprises two or more separate die members. The molding die in the present embodiment is illustrated in Fig. 1. The molding die comprises an upper die 1, a middle die 2, and a lower die 3. The middle die 2 has a hollow 4 inside, and the cavity is formed inside by connecting the lower die 3 and the upper die 1 to the middle die 2. A seal member (not shown in the figure) is disposed in the bonding surface of the middle die 2 with the lower die 3 and the upper die 1 in such a way that the inside of the cavity is sealed when the middle die 2 is connected to the upper die 1 and the lower die 3. The molding die is connected to a resin injection line and a suction line (not shown in the figure) so as to communicate with the inside of the cavity. The resin injection line and the suction line are disposed in such a way that the resin is flowed in the thickness direction of the dry fiber preform when the dry fiber preform is disposed in the molding die.

An arrangement example of a heating control part according to the present embodiment is illustrated in Fig. 2. The heating control part comprises a lower die heating control part 5 and an upper die heating control part 6. The heating control part of the present embodiment may be a heating plate capable of raising a temperature to an intended range by coming into contact with the molding die. The heating control part is not limited to this, but may be embedded in the molding die. The heating control part may be disposed in such a way that the only part in which the dry fiber preform exists is heated to prevent advance heat transfer from the circumference of the metal mold. In order to control the quantity of heat transfer, a heating control plate 7 comprising a plate for controlling heat transfer (for example, of aluminum alloy) may be mediated between the heating plate on the side in which the temperature raising is carried out on ahead (high temperature side) and the molding die. Further, the method for controlling the quantity of heat transfer is not limited to the above method.

The lower die heating control part 5 includes a lower die heat source for raising the temperature of the lower die 3, and is capable of controlling the heating temperature of the lower die heat source. There may be single or a plurality of lower die heat sources, which can almost uniformly heating the plane facing the direction of the cavity of the lower die 3. In the present embodiment, a plurality of heaters are embedded at intervals in the lower die heating control part 5.

The upper die heating control part 6 includes an upper die heat source for raising the temperature of the upper die 1, and is capable of controlling the heating temperature of the upper die heat source. There may be single or a plurality of upper die heat sources, which can almost uniformly heating the plane facing the direction of the cavity of the upper die 1. In the present embodiment, a plurality of heaters are embedded at intervals in upper die heating control part 6.

Further, in the case where there are a plurality of lower die heat sources, the lower die heat sources may have a constitution that allows the heating temperature of each lower die heat source to be controlled individually. In the case where there are a plurality of upper die heat sources, the upper die heat sources may have a constitution that allows the heating temperature of each upper die heat source to be controlled individually. It becomes thus possible to form a temperature difference not only in the thickness direction of dry fiber preform 8 but also in the in-plane direction.

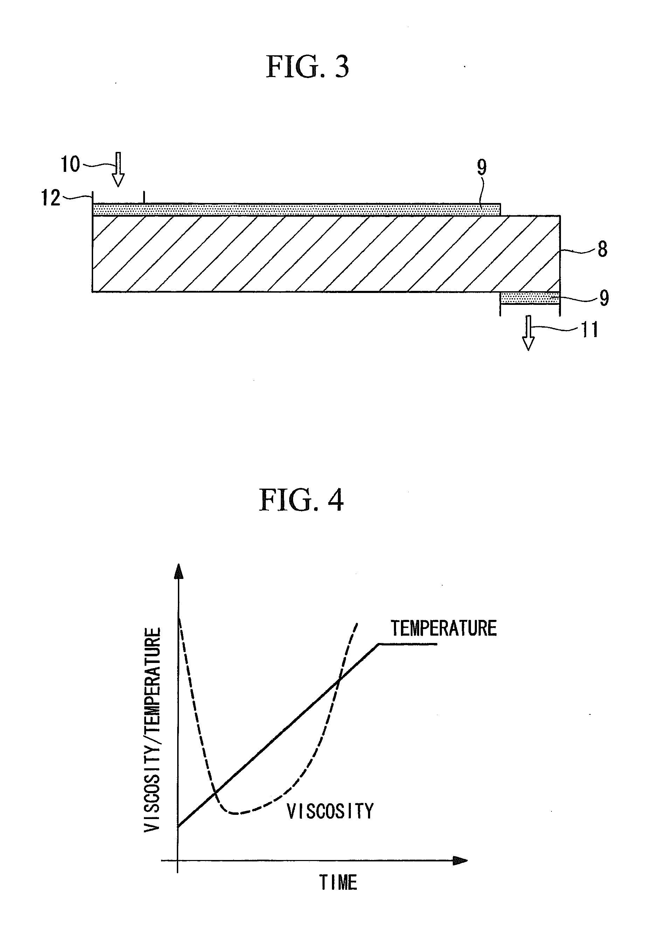

It is preferable in the RTM apparatus according to the present embodiment that an intermediate medium be disposed between the molding die and a dry fiber preform 8 when the dry fiber preform 8 is disposed in the cavity. The intermediate medium may be disposed between the lower die 3 and the dry fiber preform 8, between the upper die 1 and the dry fiber preform 8, or both between the lower die 3 and the dry fiber preform 8 and between the upper die 1 and the dry fiber preform 8. The kind and size of the intermediate medium are selected appropriately. For example, a porous plate or a perforated film may be used as an intermediate medium. An arrangement example of the intermediate medium is illustrated in Fig. 3. For the sake of simplification of the explanation, the description of the upper die and the lower die is omitted. Particularly, in Fig. 3, an intermediate medium 9 may be disposed both on the side of resin injection part 10 and on the side of resin discharging part 11 in the dry fiber preform 8, each having a staggered position from each other. The intermediate medium 9 disposed on the side of a resin injection part 10 is larger in area than the intermediate medium 9 disposed on the side of a resin discharging part 11. By doing so, the resin injected in the cavity from a resin injection line 12 becomes easy to diffuse in the surface direction of the dry fiber preform 8.

Next, an RTM method according to the present embodiment is explained.

The dry fiber preform to be used in the present embodiment may include a carbon fiber, a glass fiber, an aramid fiber, a metal fiber, a boron fiber, an aluminum fiber, and a silicon carbide high strength synthetic fiber, and a carbon fiber is particularly preferable.

A resin to be used in the present embodiment may include a thermosetting resin such as, for example, an epoxy resin. In the present embodiment, phenol resins, polyimide resins, bismaleimide resins, benzoxazine resins, and so on containing a lot of volatile components that have been difficult to be molded may be used. The relationship between time and viscosity/temperature in the thermosetting resin is illustrated in Fig. 4. In Fig. 4, the horizontal axis represents time, the vertical axis represents viscosity/temperature, the broken line represents a viscosity profile, and the solid line represents a temperature profile. The thermosetting resin once decreases in viscosity by heating, and when the predetermined heating condition is achieved, a three dimensional crosslinking reaction proceeds and the viscosity increases. The thermosetting resin may be heated in advance to make a low viscous state to such an extent that can be impregnated into the dry fiber preform, and thereafter injected in the cavity. The heating condition is set according to the recommended condition by the distribution source.

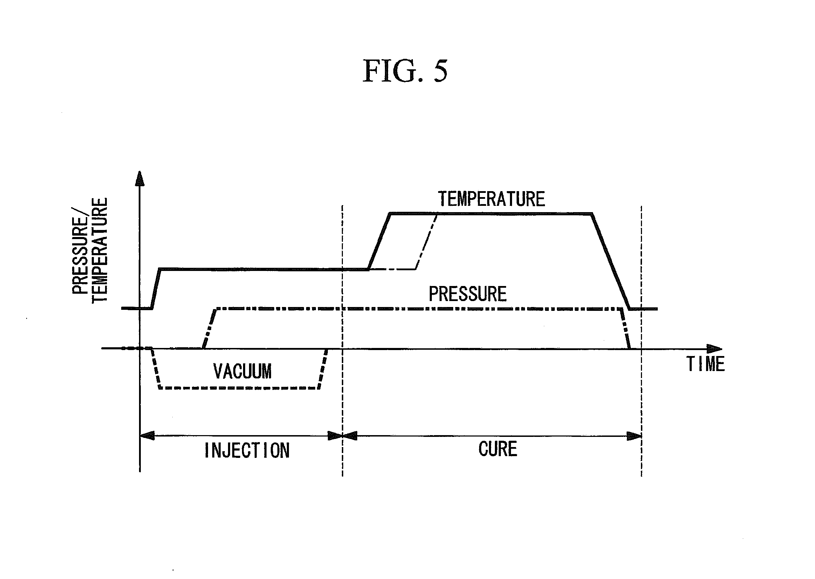

In Fig. 5, a diagram explaining the steps of the RTM method according to the present embodiment is illustrated. In the RTM method according to the present embodiment, mold clamping is carried out after the dry fiber preform is disposed in the cavity. Next, the inside of the cavity is reduced in pressure by sucking from the suction line. Simultaneously, the temperature of the molding die is raised so that the thermosetting resin to be used can maintain the low viscous state for a long time. Next, the thermosetting resin is subject to a vacuum impregnation and a pressure injection through the resin injection line in the cavity, and is impregnated into the plate thickness direction of the dry fiber preform. After the thermosetting resin is impregnated into the entire dry fiber preform, the suction of resin is discontinued. At this time, it is preferable to continue to pressurize the resin because an effect of reducing the resin sink and bubble generation is obtained when the pressurization of the resin is continued to be carried out.

Next, the thermosetting resin impregnated into the dry fiber preform is cured. The RTM method according to the present embodiment comprises a first temperature raising step and a second temperature raising step in order to cure the thermosetting resin.

In the first temperature raising step, first of all, the temperature of only one of the lower die or the upper die is raised by the heating control part at a predetermined rate. In the present embodiment, explanation is made provided that the temperature of the lower die is raised by heating the lower die by the lower die heating control part.

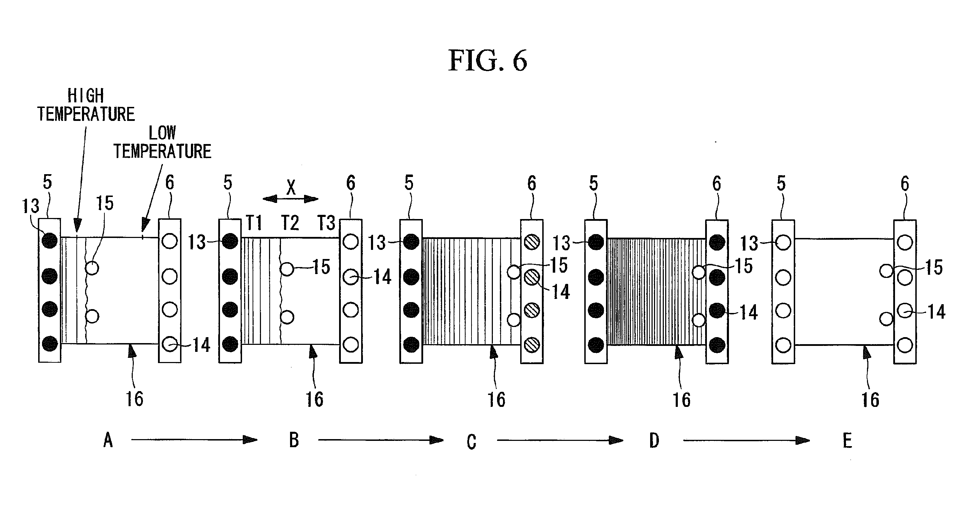

Fig. 6 shows a schematic diagram explaining a state how curing of the thermosetting resin is going on by an RTM method according to the present embodiment. In Fig. 6, the description of the molding die is abbreviated for the sake of simplification of the diagram.

When the temperature of the lower die 3 is raised, the temperature of a part near a lower die heat source 13 (lower die side) in dry fiber preform including thermosetting resin 16 increases at first (A in Fig. 6). At this time, the temperature of dry fiber preform including thermosetting resin 16 existing in a part apart from the lower die heat source 13 (upper die side) remains to be low (the temperature at which the resin shows a low viscosity). As the temperature of the lower die heating control part 5 is raised, the heat moves toward the side of the upper die heating control part, and a temperature gradient is formed in the thickness direction x of the dry fiber preform (B in Fig. 6). The temperature difference between the lower die heating control part 5 and the upper die heating control part 6, namely, the temperature difference between the lower side and the upper side of the dry fiber preform including the thermosetting resin 16 is produced. The temperature difference is appropriately set depending on the kind of the used thermosetting resin, the heating profile of the lower die heat source 13, the thickness of the dry fiber preform, the fiber density of the dry fiber preform, and so on. It is preferable that the temperature difference be set to a temperature equal to or more than the predetermined value. In the present embodiment, the predetermined value is defined as the temperature difference when the heat generated from the lower die heat source 13 is transferred to the side of the upper die heating control part of dry fiber preform including a thermosetting resin 16.

The temperature raising of the upper die is initiated by the upper die heating control part 6 as a second temperature raising step after the temperature gradient is formed (C in Fig. 6). The upper die heating control part 6 controls the temperature of an upper die heat source 14 so as not to become higher than the temperature of the lower die heating control part 5. In initiating the temperature raising of the upper die heating control part 6, it is possible to make the temperature of the upper die heating control part 6 not higher than the temperature of the lower die heating control part 5 by just controlling the heating of the upper die heat source 14 because the temperature gradient already exists, having a temperature difference equal to or more than the predetermined value between the lower side and the upper side of a dry fiber preform including a thermosetting resin 16.

The temperature of the lower die and the upper die is finally raised to the curing retention temperature of the resin, and the curing retention temperature is maintained for a predetermined time (D in Fig. 6). After that, the heating by each heat source is discontinued (E in Fig. 6).

According to the present embodiment, a viscosity gradient is also substantively formed by forming the temperature gradient in the thickness direction (x) of dry fiber preform impregnated with the thermosetting resin 16. Namely, the viscosity of the thermosetting resin on the high temperature side becomes high, and the viscosity of the thermosetting resin on the low temperature side remains to be low. Bubbles 15 in the thermosetting resin are generated in the region where the viscosity is low. Moreover, bubbles 15 contained in dry fiber preform impregnated with the thermosetting resin 16 and volatile components 15 generated accompanied by the heating for the curing reaction move toward the low viscosity side where bubbles and volatile components can exist stably as the viscosity of the resin on the lower die side increases, or are generated in the region of the low viscosity side. Resin sinks at the time of curing resin move to the low viscosity side (uncured side) in a similar way. Thereby, it is possible to collect bubbles, volatile components, and resin sinks on the upper mold side within the molding die. Therefore, it is possible to carry out RTM without generating voids or porosity internally while maintaining a plate thickness accuracy even for a thick plate member having a plate thickness of 10 mm or more.

In the present embodiment, since the plate thickness of the dry fiber preform is large, when the temperature of the molding die is raised by the heating control part, the heat is used to the heating of the resin and, at the same time, the molding die is cooled by the heat transfer to the air, therefore it is possible to form a temperature gradient to the thickness direction of the dry fiber preform without a cooling mechanism.

Further, mold clamping may be carried out after an intermediate member is disposed between the molding die and the dry fiber preform in the present embodiment. It is possible to collect the voids and porosity in the intermediate member when the intermediate member is disposed between the upper die and the dry fiber preform.

### {Example}

A dry fiber preform having a thickness of 2 inches (50.4 mm) comprising a carbon fiber was disposed in the cavity, and an epoxy resin was impregnated into the dry fiber preform from the upper die side toward the thickness direction according to the present embodiment described above. The dry fiber preform and the epoxy resin existed at the rate of 55% by volume and 45% by volume, respectively.

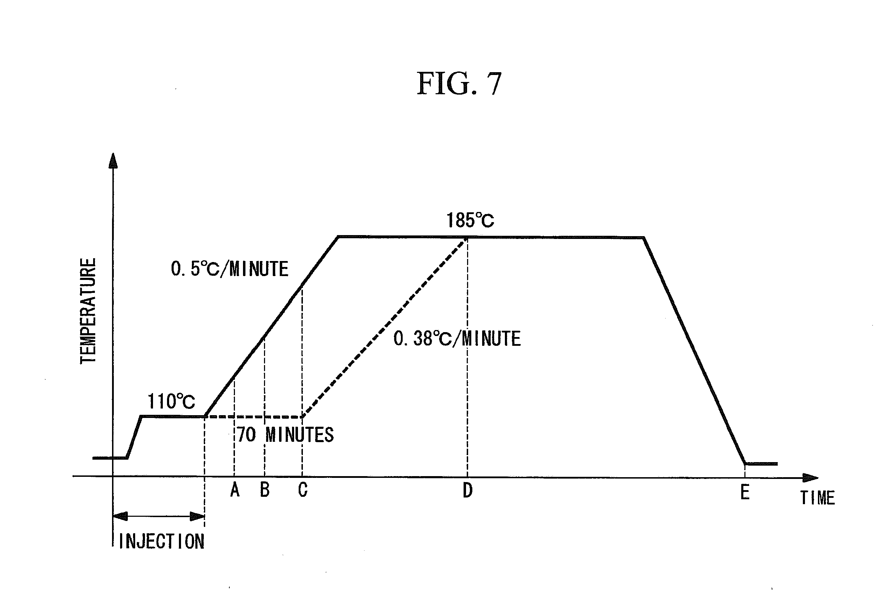

The temperature profiles in RTM according to the present example are illustrated in Fig. 7. In Fig. 7, the horizontal axis represents time, the vertical axis represents temperature, the solid line represents the temperature profile of the lower die, and the broken line represents the temperature profile of the upper die.

The temperature of the molding die (the lower die, the middle die, and the upper die) in the course of the resin impregnation was made to be 110°C. After the completion of the impregnation, the lower die was heated and the temperature of the lower die was raised by the lower die heating control part by raising the temperature of the lower die heat source at a temperature raising rate of 0.5°C/minute. The temperature of the lower die was raised to a curing retention temperature of 185°C. The temperature of the upper die also reached 185°C, and after the temperature was maintained for 2 hours, the heating was discontinued.

After the temperature of the lower die was raised by 35°C so that a sufficient temperature difference was produced within the molding die, the upper die was heated and the temperature of the upper die was raised by the upper die heating control part by raising the temperature of the upper die heat source at a temperature raising rate of 0.38°C/minute that is lower than the temperature raising rate of the lower die. The temperature of the upper die was raised to a curing retention temperature of 185°C, and after the temperature was maintained, the heating of the upper die and the lower die was simultaneously discontinued.

At an early heating stage of the lower die (at the time of A), the temperature of a part near the lower die heat source (T1) is raised and the temperatures of a part far from the lower die heat source (T3) and the central part (T2) of T1 and T3 are not raised. In the present example, the heat is transferred from the lower die side to the upper die side at the time when the temperature of the lower die is raised by 35°C (at the time of C), and the entire dry fiber preform impregnated with the resin is heated. At this time, the temperature gradient is formed from T1 to T3, and the relation of the temperatures becomes t1 > t2 > t3.

When the thermosetting resin exceeds the predetermined heating condition, since the crosslinking reaction proceeds and the viscosity becomes high, the viscosity of the resin becomes high from the part near the lower die heat source. Bubbles, volatile components, and resin sinks move toward the low viscosity side as the temperature of the resin increases.

When the temperature of the upper die reaches the curing retention temperature (at the time of D), the temperatures of T1 to T3 are homogenized (t1 = t2 = t3). After that, the dry fiber preform including the resin is cooled by discontinuing the heating (at the time of E).

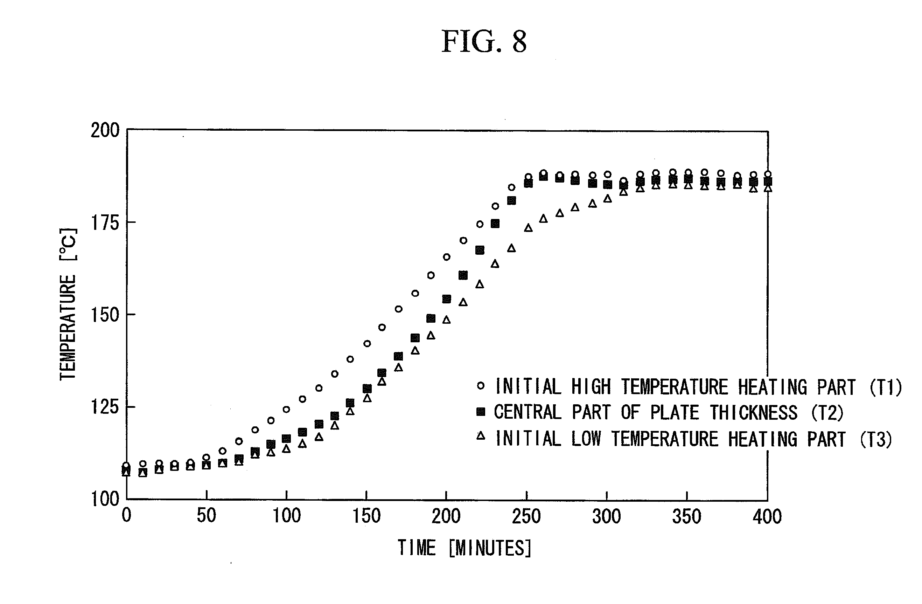

The temperatures at T1 to T3 in the course of RTM of the present example were measured respectively. The temperatures in the course of RTM were measured by placing thermocouples at the lower die side (T1), the central part (T2), and the upper die side (T3) in the dry fiber preform. The results are shown in Fig. 8. In Fig. 8, the horizontal axis represents time and the vertical axis represents temperature. The temperature raising of the upper die was started at 70 minutes from the time when the temperature raising of the lower die was started. According to Fig. 8, by raising the temperature of the upper die after the temperature of the lower die was raised by 35°C, it was confirmed that the temperature gradient in the plate thickness direction of the dry fiber preform including the resin (from T1 to T3) was always formed until the temperature of the upper die reached the curing retention temperature.

When the cross section of the molded article molded by RTM in Example was observed by an optical microscope, the generation of voids and porosity inside the molded article was not seen.

### {Comparative Example}

Comparative Example was conducted in the same manner as in Example except that the temperature of the upper die is raised by the same temperature profile of the lower die as in Example. Voids and porosity were generated inside the molded article molded as Comparative Example.

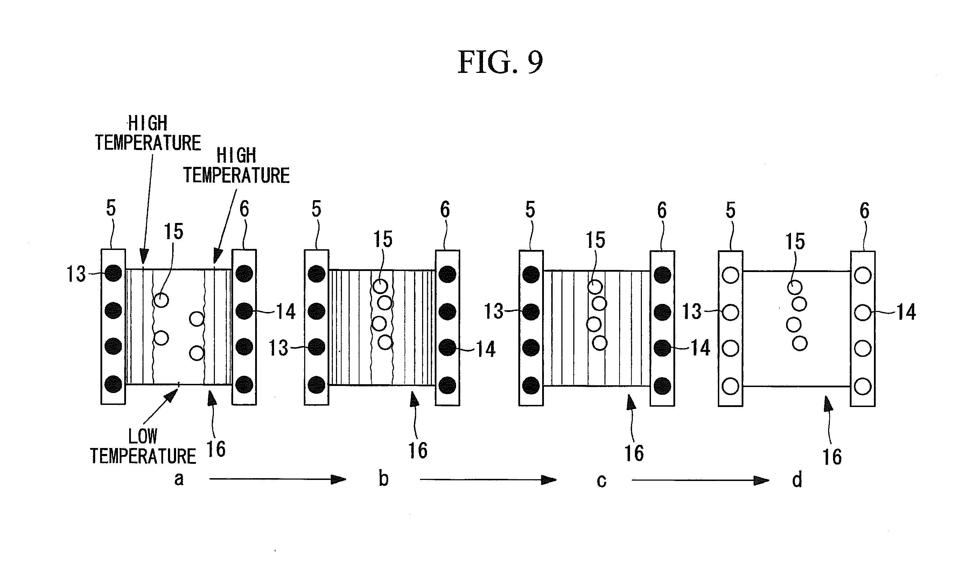

Fig. 9 shows a schematic diagram explaining a state how curing of the thermosetting resin is going on by the RTM method according to Comparative Example. In Comparative Example, since the temperatures of lower die heating control part 5 and upper die heating control part 6 are simultaneously raised, the central part is to be heated last of all. Therefore, since voids, porosity, and resin sinks are easy to collect in the central part, voids and porosity derived from bubbles and volatile components are generated inside after the completion of the curing cycle.

### {Reference Signs List}

- 1: upper die
- 2: middle die
- 3: lower die
- 4: hollow
- 5: lower die heating control part
- 6: upper die heating control part
- 7: heating control plate
- 8: dry fiber preform
- 9: intermediate medium
- 10: resin injection part
- 11: resin discharging part
- 12: resin injection line
- 13: lower die heat source
- 14: upper die heat source
- 15: bubbles, volatile components
- 16: dry fiber preform including thermosetting resin

## Claims

1. A RTM method comprising:
a first temperature raising step comprising impregnating a thermosetting resin into a dry fiber preform disposed in a molding die comprising two or more separate die members, and thereafter raising a temperature of any one of the die members constituting the molding die to form a temperature gradient from one side of the dry fiber preform toward the other side, the temperature gradient having a temperature difference equal to or more than a predetermined value; and
a second temperature raising step comprising raising a temperature of a die member different from the die member whose temperature is raised in the first temperature raising step.

2. The RTM method according to Claim 1, wherein the second temperature raising step comprises, after the first temperature raising step, raising the temperature of a die member different from the die member whose temperature is raised in the first temperature raising step so as not to be higher than the temperature of the die member whose temperature is raised in the first temperature raising step.

3. The RTM method according to Claim 1 or 2, wherein the thermosetting resin is impregnated into the dry fiber preform after an intermediate medium is disposed between the molding die and the dry fiber preform.

4. An RTM apparatus comprising:
a first heating control part for impregnating a thermosetting resin into a dry fiber preform disposed in a molding die comprising two or more separate die members, and thereafter raising a temperature of any one of die members by heating to form a temperature gradient from one side of the dry fiber preform toward the other side, the temperature gradient having a temperature difference equal to or more than a predetermined value; and
a second heating control part for raising temperature of a die member different from the die member whose temperature is raised in the first temperature raising step so as not to be higher than the temperature of the die member whose temperature is raised in the first temperature raising step.

5. The RTM apparatus according to Claim 4, wherein an intermediate medium is disposed between the molding die and the dry fiber preform.
